# EUROPÄISCHE PATENTSCHRIFT

(11) **EP 1 713 675 B1**
(45) Veröffentlichungstag und Bekanntmachung des Hinweises auf die Patenterteilung: **05.11.2008**
(21) Anmeldenummer: 05701420.1
(22) Anmeldetag: 03.01.2005
(51) Int. Cl.: B60T 8/36, B60T 8/50

(54) **DRUCKSTEUERGERÄT**
PRESSURE CONTROL DEVICE
APPAREIL DE REGULATION DE PRESSION

(30) Priorität: 08.01.2004 DE 102004001326; 03.09.2004 DE 102004042647
(43) Veröffentlichungstag der Anmeldung: 25.10.2006
(73) Patentinhaber: Continental Teves AG & Co. oHG, 60488 Frankfurt (DE)
(72) Erfinder: FENNEL, Helmut, 65812 Bad Soden (DE); BATISTIC, Ivica, 60385 Frankfurt am Main (DE)
(86) Internationale Anmeldenummer: PCT/EP2005/050004
(87) Internationale Veröffentlichungsnummer: WO 2005/066004

(56) Entgegenhaltungen:
- DE-A1- 3 742 172
- DE-A1- 4 121 470
- DE-A1- 19 841 334

## Beschreibung

Die Erfindung betrifft ein Drucksteuergerät zur Variation des Bremsdrucks in wenigstens einer Radbremse eines Fahrzeugs nach dem Oberbegriff des Patentanspruchs 1.

Aus der DE 198 41 334 A1 ist bereits eine derartiges Drucksteuergerät zur Variation des Bremsdrucks in mehreren Radbremsen eines Fahrzeugs bekannt, das zur Variation des Bremsdrucks in einem Steuergeräteblock mehrere Einlass- und Auslassventile aufweist. Die Einlassventile stellen in ihrer Grundstellung über mehrere Bremsdruckkanäle im Steuergeräteblock eine Verbindung zwischen einem Hauptzylinder (Druckmittelquelle) und den Radbremsen her. Zwischen den Einlassventilen und den Radbremsen sind an den Bremsdruckkanälen mehrere Rücklaufkanäle angeschlossenen, in denen die in Grundstellung geschlossenen Auslassventile eingesetzt sind. Die Rücklaufkanäle sind über die Auslassventile an einem paar Niederdruckspeicher angeschlossen, die in einer Druckabbauphase über die geöffneten Auslassventile das überschüssige Druckmittel der Radbremsen aufnehmen und einer nachgeschalteten Pumpe zuführen, die das aus den Radbremsen abgelassene Druckmittel nach dem Rückförderprinzip wieder stromaufwärts der Einlassventile den Bremsdruckkanälen zuführen.

Insbesondere entstehen beim Schalten der Einlassventile unerwünschte Geräusche, die durch die Druckimpulse während den Druckaufbauphasen in den Radbremsen verursacht werden.

Aus DE 414 21 470 A1 geht bereits eine Bremsdruck-Steuervorrichtung der gattungsbildenden Art hervor, bei der zum Anheben des Radzylinderdrucks das Auslassventil geschlossen und das Einlassventil offen ist. Wenn der Radzylinderdruck konstant bleiben soll, verharren beide Ventile geschlossen. Soll hingegen der Radzylinderdruck reduziert werden, dann wird das Einlassventil geschlossen und das Auslassventil geöffnet. Um während einer Antiblockiersteuerung auch möglichst kleine Änderungen des Radzylinderdrucks nachregulieren zu können, kann das Einlassventil kurzzeitig geschlossen und das Auslassventil kurzzeitig geöffnet werden, sodass beide Ventile kurzzeitig zur Feinregelung des momentanen Radzylinderdrucks geöffnet sind.

Diese Bremsdruck-Steuervorrichtung hat jedoch den Nachteil, dass beim Anheben des Radzylinderdrucks Geräusche auftreten können, da zum Druckaufbau im ersten Schritt zunächst das Auslassventil geschlossen und das Einlassventil geöffnet wird, bevor oben genannte Feinregelung überhaupt erfolgen kann.

Aus DE 37 42 172 A1 ist ein Verfahren zur Steuerung einer blockiergeschützten hydraulischen Bremsanlage bekannt, die zur Gewährleistung eines hinreichend großen Reservevolumens im Hauptzylinder eine Überwachung des Hauptzylinderkolbens vorgesehen ist, wobei abhängig von der Kolbenposition das Einlassventil geschaltet wird, während das Auslassventil abhängig vom Raddrehverhalten relativ zum Einlassventil angesteuert wird. Die Positionierung des Hauptzylinderkolbens wird folglich abhängig von der Durchflussrate beider Ventile bestimmt, sodass die Funktion des Ein- und Auslassventils nicht nur auf die Steuerung des Bremsschlupfverlaufs beschränkt ist.

Daher ist es die Aufgabe der vorliegenden Erfindung, ein Drucksteuergerät der angegebenen Art derart zu verbessern, dass mit möglichst einfachen Maßnahmen eine Geräuschentwicklung vermieden wird.

Diese Aufgabe wird für ein Drucksteuergerät der angegebenen Art anhand der kennzeichnenden Merkmale des Patentanspruchs 1 gelöst.

Gemäß der Erfindung wird ein geräuschreduziertes Drucksteuergerät vorgeschlagen, dessen durch die Betätigung der Einlassventile initiierten Geräusche durch das geschickte funktionelle Zusammenspiel der Ein- und Auslassventile einer jeden Radbremse gänzlich eliminiert werden können.

Weitere Merkmale, Vorteile und Anwendungsmöglichkeiten der Erfindung gehen im nachfolgenden aus der Beschreibung eines Ausführungsbeispieles anhand zweier Zeichnungen hervor.

Es zeigen:
- Fig. 1: den prinzipiellen Aufbau für ein Drucksteuergerät, das zwischen einer Druckmittelquelle und einer Radbremse angeordnet ist,
- Fig. 2a-c: Diagramme zur zeitlichen Länge und Abfolge der Ein- und Auslassventilbetätigung, um einen geräuschreduzierten Druckaufbau in der Radbremse zu bewirken.

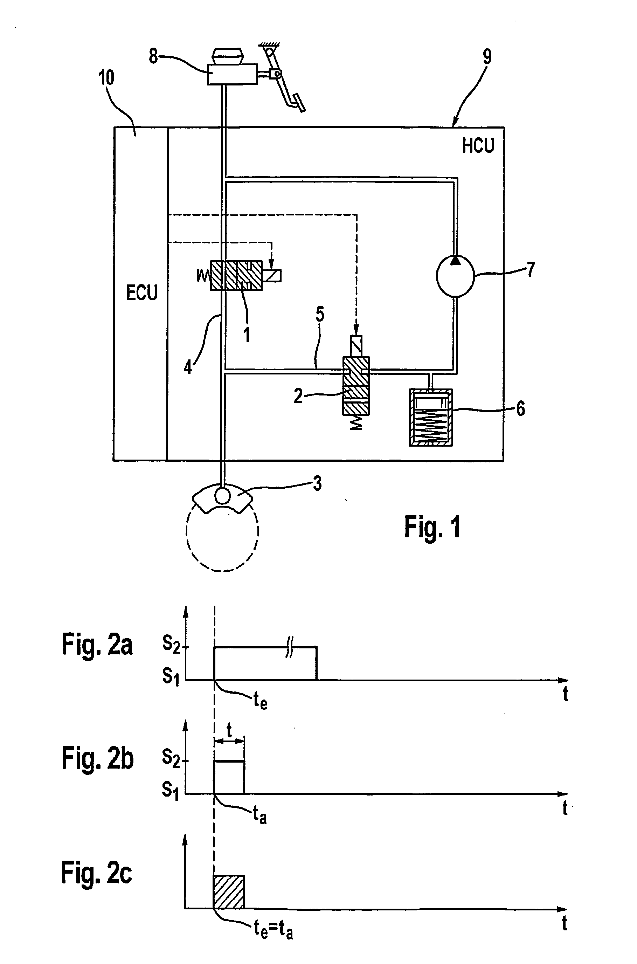

Die Figur 1 veranschaulicht den elementaren Aufbau eines Drucksteuergerät zur Variation des Bremsdrucks in einer Radbremse 3 eines Fahrzeugs, das zur Variation des Bremsdrucks in einem Steuergeräteblock 9 ein Einlass- und Auslassventil 1, 2 aufweist. Das Einlassventil 1 stellt in seiner Grundstellung über einen Bremsdruckkanal 4 im Steuergeräteblock 9 eine Verbindung zwischen einer Druckmittelquelle 8 und der Radbremse 3 her. Zwischen dem Einlassventil 1 und der Radbremse 3 ist an dem Bremsdruckkanal 4 ein Rücklaufkanal 5 angeschlossenen, in den das in Grundstellung geschlossenen Auslassventil 2 eingesetzt ist. Der Rücklaufkanal 5 ist über das Auslassventil 2 beispielsweise an einem im Steuergeräteblock 9 eingesetzten Niederdruckspeicher 6 angeschlossen, der in einer Druckabbauphase über das geöffnete Auslassventil 2 das überschüssige Druckmittel der Radbremse 3 aufnimmt und das Druckmittel einer nachgeschalteten Pumpe 7 zuführt, die im Steuergeräteblock 9 integriert ist, die nach dem Rückförderprinzip das aus der Radbremse 3 abgelassene Druckmittel wieder stromaufwärts zum Einlassventil 1 dem Bremsdruckkanal 4 zuführt.

Sowohl das Ein- als auch das Auslassventil 1, 2 ist bevorzugt als 2/2-Wegesitzventil ausgeführt, das im vorliegenden Ausführungsbeispiel elektromagnetisch betätigbar ist. Eine hierzu erforderliche Steuerelektronik 10 ist bevorzugt am Steuergeräteblock 9 angeordnet und elektrisch mit dem Ein- und Auslassventil 1, 2 verbunden.

Ergänzend wird darauf hingewiesen, dass entsprechend der Anzahl der Radbremsen in der Regel im Steuergeräteblock 9 weitere Ein- und Auslassventile in mehreren Ventilreihen angeordnet sind, auf welche die nachfolgend erläuterte Erfindung ebenso uneingeschränkt anzuwenden ist.

Zur Geräuschreduzierung sieht die Erfindung vor, dassin einer Bremsdruckregelphase, in welcher der Bremsdruck in der Radbremse 3 erhöht werden soll, sowohl das Einlass- als auch das Auslassventil 1, 2 geöffnet ist, wobei während der Öffnungsdauer des Einlassventils 1 das Auslassventil 2 nur für eine kleine Zeitspanne t geöffnet ist, damit die gewünschte Bremsdruckerhöhung in der Radbremse 3 gewährleistet bleibt. Der Öffnungszeitpunkt ta des Auslassventils 2 richtet sich hierbei grundsätzlich nach dem Öffnungszeitpunkt te des Einlassventils 1, wobei zwecks effektiver Vermeidung eines durch den Öffnungshub des Einlassventils 1 initiierten Geräuschimpulses der Öffnungszeitpunkt ta des Auslassventils 2 dem Öffnungszeitpunkt te des Einlassventils 1 entspricht.. Die Zeitspanne t, in der außer dem Einlassventil 1 auch das Auslassventil 2 geöffnet ist, beschränkt sich auf wenige Millisekunden (maximal 4 ms).

Zum Ausgleich des während der Zeitspanne t über das Auslassventil 2 aus der Radbremse 3 abgelassenen Druckmittels, ist die Öffnungsdauer des Einlassventils 1 näherungsweise um die Zeitspanne t des Auslassventils 2 vergrößert.

Die Figuren 2a bis 2c geben die zuvor erläuterten Schaltverhältnisse des Ein- und Auslassventils in einem X/Y-Koordinatensystem graphisch wieder. Hierzu ist entlang der Abszisse jeweils die Öffnungsdauer und über der Ordinate die jeweilige Schaltstellung S1, S2 des Ein- und Auslassventils 1, 2 aufgetragen, in der das Ein- bzw. das Auslassventil 1, 2 entweder geöffnet oder geschlossen ist.

### Hierbei zeigen im Einzelnen:

Fig. 2a ein Rechtecksignal für eine Ventilschaltstellung, in der das binär schaltende Einlassventil 1 zum Bremsdruckaufbau mechanisch, vorzugsweise durch eine Federkraft o. dgl. für eine definierte Dauer geöffnet ist,

Fig. 2b ein Rechtecksignal für eine Ventilschaltstellung, in der das binär schaltende Auslassventil 2 gleichzeitig mit der Erregung des Einlassventils 1 (siehe Fig. 2a) ebenso. für eine gewisse Zeitspanne t vorzugsweise elektromagnetisch, piezoelektrisch o. dgl. erregt ist, um für eine gegenüber der Öffnungsdauer des Einlassventils 1 erheblich kleinere (nicht maßstabsgerecht dargestellte) Zeitspanne t gleichfalls in einer geöffneten Schaltstellung zu verharren,

Fig. 2c die für die Geräuschreduzierung wesentliche Ventilüberschneidung, bei der sowohl das Einlass- als auch das Auslassventil 1, 2 für die kurze Zeitspanne t gleichzeitig geöffnet ist.

Durch die hiermit vorgestellte Erfindung lässt sich auf verblüffend einfache Weise die infolge der Druckbeaufschlagung der Radbremse 3 während einer Bremsdruckregelphase bisher initiierten Geräusche vermeiden, da die normalerweise zwischen der Radbremse 3, dem Auslassventil 2 und dem Hauptzylinder (Druckmittelquelle 8) komprimierte Bremsflüssigkeitssäule durch das Öffnen des Auslassventils 2 während einer schlupfgeregelten Druckaufbauphase in Richtung des leeren Niederdruckspeichers 6 teilweise expandieren kann. Die Druckaufbaugeräusche, welche bisher bei jedem Öffnen des Einlassventils 1 infolge der Fortpflanzung des Druckaufbauimpulses auf die inkompressibel vorgespannte Flüssigkeitssäule im Bremsdruckkanal 4 entstanden, lassen sich somit wirkungsvoll verhindern.

Abschließend wird darauf verwiesen, dass die Erfindung nicht auf Bremsanlagen und Drucksteuergeräte begrenzt ist, die nach dem Rückfördersystem arbeiten. Die Erfindung kann ebenso für sogenannte offene oder halboffene Hydraulikkreise angewendet werden, bei denen die Rücklaufleitung stromabwärts des Auslassventils unmittelbar an einem offenen Vorratsbehälter angeschlossen ist, der in der Regel mit dem Hauptzylinder verbunden ist.

### Bezugszeichenliste

- 1: Einlassventil
- 2: Auslassventil
- 3: Radbremse
- 4: Bremsdruckkanal
- 5: Rücklaufkanal
- 6: Niederdruckspeicher
- 7: Pumpe
- 8: Druckmittelquelle
- 9: Steuergeräteblock
- 10: Steuerelektronik

## Patentansprüche

1. Drucksteuergerät zur Variation des Bremsdrucks in wenigstens einer Radbremse (3) eines Fahrzeugs, das zur Variation des Bremsdrucks wenigstens ein Einlass- und ein Auslassventil (1, 2) aufweist, mit einem eine Druckmittelquelle (8) mit der Radbremse (3) verbindenden Bremsdruckkanal (4), in dem das Einlassventil (1) eingesetzt ist, sowie mit einem zwischen dem Einlassventil (1) und der Radbremse (3) am Bremsdruckkanal (4) angeschlossenen Rücklaufkanal (5), in dem das Auslassventil (2) eingesetzt ist, wobei der Rücklaufkanal (5) entweder an einem Niederdruckspeicher (6) oder einem drucklosen Vorratsbehälter angeschlossen ist, **dadurch gekennzeichnet, dass** in jeder Bremsdruckregelphase, in welcher der Bremsdruck zum Bremsdruckaufbau in der Radbremse (3) erhöht werden soll, sowohl das Einlass- als auch das Auslassventil (1, 2) mittels einer Steuerelektronik (10) gleichzeitig geöffnet ist, wobei bei jedem Öffnen des Einlassventils (1) während der Öffnungsdauer des Einlassventils (1) das Auslassventil (2) für eine Zeitspanne (t) geöffnet ist, die kleiner ist als die Öffnungsdauer des Einlassventils (1), wodurch zur Verhinderung eines ein Geräusch verursachenden Druckaufbauimpulses im Bremsdruckkanal (4) der Bremsdruck teilweise über das geöffnete Auslassventil (2) entweder zum Niederdruckspeicher (6) oder zum drucklosen Vorratsbehälter expandiert.

2. Drucksteuergerät nach Anspruch 1, **dadurch gekennzeichnet, dass** der Öffnungszeitpunkt (ta) des Auslassventils (2) abhängig vom Öffnungszeitpunkt (te) des Einlassventils (1) ist, wobei der Öffnungszeitpunkt (ta) des Auslassventils (2) dem Öffnungszeitpunkt (te) des Einlassventils (1) entspricht.

3. Drucksteuergerät nach Anspruch 1 **dadurch gekennzeichnet, dass** die Zeitspanne (t), in der das Auslassventil (2) geöffnet ist, maximal vier Millisekunden beträgt.

4. Drucksteuergerät nach einem der vorangegangenen Ansprüche, **dadurch gekennzeichnet, dass** zum Ausgleich des über das geöffnete Auslassventil (2) während der Zeitspanne (t) aus der Radbremse (3) abgelassenen Druckmittels die Öffnungsdauer des Einlassventils (1) näherungsweise um die Zeitspanne (t) des geöffneten Auslassventils (2) vergrößert ist.

## Claims

1. Pressure control apparatus for varying the brake pressure in at least one wheel brake (3) of a vehicle, which pressure control apparatus has at least one inlet and one outlet valve (1, 2) for varying the brake pressure, with a brake-pressure duct (4) which connects a pressure-medium source (8) to the wheel brake (3) and in which the inlet valve (1) is inserted, and with a return duct (5) which is connected to the brake-pressure duct (4) between the inlet valve (1) and the wheel brake (3) and in which the outlet valve (2) is inserted, the return duct (5) being connected either to a low-pressure accumulator (6) or to a pressureless reservoir, **characterized in that**, in each brake-pressure regulation phase in which the brake pressure is to be increased in order to build up brake pressure in the wheel brake (3), both the inlet and the outlet valve (1, 2) are opened simultaneously by means of control electronics (10), in the case of each opening of the inlet valve (1) the outlet valve (2) being opened, during the opening duration of the inlet valve (1), for a time span (t) which is lower than the opening duration of the inlet valve (1), as a result of which, in order to prevent a pressure build-up pulse causing a noise in the brake-pressure duct (4), the brake pressure expands partially via the open outlet valve (2) either to the low-pressure accumulator (6) or to the pressureless reservoir.

2. Pressure control apparatus according to Claim 1, **characterized in that** the opening time point (ta) of the outlet valve (2) is dependent on the opening time point (te) of the inlet valve (1), the opening time point (ta) of the outlet valve (2) corresponding to the opening time point (te) of the inlet valve (1).

3. Pressure control apparatus according to Claim 1, **characterized in that** the time span (t) in which the outlet valve (2) is opened amounts at most to four milliseconds.

4. Pressure control apparatus according to one of the preceding claims, **characterized in that**, in order to compensate the pressure medium discharged out of the wheel brake (3) via the open outlet valve (2) during the time span (t), the opening duration of the inlet valve (1) is increased approximately by the amount of the time span (t) of the open outlet valve (2).

## Revendications

1. Appareil de régulation de pression permettant de faire varier la pression de freinage dans au moins un frein de roue (3) d'un véhicule, qui comprend au moins une soupape d'entrée et une soupape de sortie (1, 2), avec un canal de pression de freinage (4) reliant une source de fluide sous pression (8) au frein de roue (3) et dans lequel la soupape d'entrée (1) est installée, ainsi qu'avec un canal de retour (5) raccordé au canal de pression de freinage (4) entre la soupape d'entrée (1) et le frein de roue (3) et dans lequel la soupape de sortie (2) est installée, dans lequel le canal de retour (5) est raccordé soit à un accumulateur basse pression (6) soit à un réservoir sans pression, **caractérisé en ce que** dans chaque phase de régulation de la pression de freinage, dans laquelle la pression de freinage doit être augmentée pour établir la pression de freinage dans le frein de roue (3), aussi bien la soupape d'entrée que la soupape de sortie (1, 2) sont ouvertes simultanément au moyen d'une électronique de commande (10), dans lequel, lors de chaque ouverture de la soupape d'entrée (1), la soupape de sortie (2) est ouverte pendant la durée de l'ouverture de la soupape d'entrée (1) durant un laps de temps (t) qui est inférieur à la durée de l'ouverture de la soupape d'entrée (1), ce qui permet de détendre la pression de freinage en partie par la soupape de sortie ouverte (2) soit vers l'accumulateur basse pression (6) soit vers le réservoir sans pression, afin d'empêcher une impulsion de pression génératrice de bruit dans le canal de pression de freinage (4).

2. Appareil de régulation de pression selon la revendication 1, **caractérisé en ce que** l'instant d'ouverture (ta) de la soupape de sortie (2) dépend de l'instant d'ouverture (te) de la soupape d'entrée (1), dans lequel l'instant d'ouverture (ta) de la soupape de sortie (2) correspond à l'instant d'ouverture (te) de la soupape d'entrée (1).

3. Appareil de régulation de pression selon la revendication 1, **caractérisé en ce que** le laps de temps (t), pendant lequel la soupape de sortie (2) est ouverte, vaut au maximum quatre millisecondes.

4. Appareil de régulation de pression selon l'une quelconque des revendications précédentes, **caractérisé en ce que** la durée de l'ouverture de la soupape d'entrée (1) est accrue approximativement du laps de temps (t) de la soupape de sortie ouverte (2), afin de compenser le fluide sous pression évacué hors du frein de roue (3) par la soupape de sortie ouverte (2) pendant le laps de temps (t).
